# FASCICULE DE BREVET EUROPEEN

(11) **EP 2 680 603 B1**
(45) Date de publication et mention de la délivrance du brevet: **28.12.2016**
(21) Numéro de dépôt: 13174118.3
(22) Date de dépôt: 27.06.2013
(51) Int. Cl.: H04N 21/4402, H04N 21/845, H04N 21/2187, H04N 21/2343, H04N 21/24, H04N 21/442, H04N 21/2743, H04L 29/06, H04L 12/811

(54) **Technique de traitement pour proposer un contenu temps réel à des entités clientes**
Verarbeitung Technik für Echtzeit-Content Auslieferung an Client-Einheiten
Processing technique to provide real-time content to client entities

(30) Priorité: 29.06.2012 FR 1256220
(43) Date de publication de la demande: 01.01.2014
(73) Titulaire: Orange, 75015 Paris (FR)
(72) Inventeur: L'Azou, Yves René, 22560 Trebeurden (FR)

(56) Documents cités:
- US-A1- 2006 227 796
- US-A1- 2011 129 011
- Seo Beomjoo ET AL: "An experimental study of video uploading from mobile devices with HTTP streaming", Proceeding MMSys '12 Proceedings of the 3rd Multimedia Systems Conference, 22 février 2012 (2012-02-22), XP055056191, NY, USA DOI: 10.1145/2155555.2155589 ISBN: 978-1-45-031131-1 Extrait de l'Internet: URL:http://delivery.acm.org/10.1145/216000 0/2155589/p215-seo.pdf [extrait le 2013-03-12]
- INGO KOFLER ET AL: "Implications of the ISO base media file format on adaptive HTTP streaming of H.264/SVC", CONSUMER COMMUNICATIONS AND NETWORKING CONFERENCE (CCNC), 2012 IEEE, IEEE, 14 January 2012 (2012-01-14), pages 549-553, XP032160856, DOI: 10.1109/CCNC.2012.6180986 ISBN: 978-1-4577-2070-3

## Description

L'invention se situe dans le domaine de la mise à disposition de contenus, notamment de contenus temps réel. Plus précisément, l'invention concerne une technique de traitement mise en oeuvre par une entité productrice proposant un contenu temps réel à des entités clientes. Le contenu est proposé sous la forme d'une pluralité de suites de segments de données correspondant respectivement à un codage d'une pluralité de codages.

On appelle par la suite « entité productrice » une entité générant des contenus et « entité cliente » une entité obtenant et restituant ces contenus à un utilisateur. Historiquement, ces contenus étaient mis à disposition par des sociétés de production audiovisuelle. L'évolution technologique permet désormais à ceux qui le souhaitent de devenir eux-mêmes producteurs. De tels contenus sont connus sous le nom de contenus personnels ou générés par un utilisateur UGC, pour « User Generated Content ». Une troisième entité assure un hébergement, c'est-à-dire un stockage et une mise à disposition du contenu. Cette troisième entité met en forme par transcodage le cas échéant le contenu produit par l'entité productrice, puis le distribue vers des serveurs de distribution, répartis par exemple géographiquement en fonction des entités clientes ciblées.

Un contenu est en général proposé codé à différents débits et formats, afin de satisfaire le plus grand nombre d'entités clientes. Le débit de codage peut alors être sélectionné par l'entité cliente par exemple en fonction du type du réseau permettant un accès de l'entité cliente ou bien encore de capacités de restitution de celle-ci.

Le codage adaptatif permet ainsi de mettre à disposition le contenu sous la forme d'une pluralité de contenus encodés. Le contenu est segmenté en une suite de blocs élémentaires, de l'ordre de quelques secondes. Puis, un bloc élémentaire est encodé en plusieurs segments de données de codages différents.

Un article de la conférence « Proceeding MMSys '12 Proceedings of the 3rd Multimedia Systems Conference », du 22 févirer 2012 intitulé « An Experimental Study of Video Uploading from Mobile Devices with HTTP Streaming » de Seo Beomjoo et al., présente un système de téléversement d'un contenu vidéo depuis un mobile.

La demande de brevet américaine publiée sous le numéro US 2011/0129011 décrit une méthode de transport de flux vidéo par l'intermédiaire d'un codage en plusieurs couches dans un réseau sans fils.

On se place par la suite dans le cas où le codage est mis en oeuvre par l'entité productrice, ce qui est généralement le cas pour les contenus personnels. L'entité productrice transmet ensuite la pluralité de contenus encodés à l'entité d'hébergement.

Dans le cas de contenus temps réel personnels, destinés à être également restitués en temps réel, la capacité d'acheminement de données de l'entité productrice à destination de l'entité d'hébergement peut être limitée et ne suffit pas à transmettre en temps réel l'ensemble des segments de données correspondant aux différents codages. Cette limitation est souvent due à la capacité du lien par l'intermédiaire duquel l'entité productrice transmet les données à destination de l'entité d'hébergement. De ce fait, ce type de contenu est uniquement proposé en accès en mode différé.

Un des buts de l'invention est de remédier à des insuffisances/inconvénients de l'état de la technique et/ou d'y apporter des améliorations.

Selon un premier aspect, l'invention a pour objet un procédé de traitement mis en oeuvre par une entité productrice proposant un contenu réel à des entités clientes par l'intermédiaire d'une entité d'hébergement sous la forme d'une pluralité de suites de segments de données correspondant respectivement à un codage d'une pluralité de codages. Le procédé comprend les étapes suivantes mises en oeuvre par l'entité productrice pour ordonner les segments de données à émettre à destination de ladite entité d'hébergement :
- une étape d'obtention d'une information représentative d'une capacité d'acheminement de segments de données de l'entité productrice à destination de l'entité d'hébergement ;
- une étape d'obtention d'une information relative à au moins un codage de la pluralité de codages, dit codage principal ;
et pour un bloc élémentaire du contenu :
- une étape de codage dudit bloc élémentaire en une pluralité de segments de données correspondant respectivement à un codage de la pluralité de codages ;
- une étape d'ordonnancement des segments de données en fonction de l'information représentative de la capacité, les segments de données associés au codage principal étant prioritaires par rapport aux segments de données associés à des codages secondaires.

Un contenu temps réel est segmenté en blocs élémentaires. Chaque bloc élémentaire est alors codé par un algorithme de codage. Un même bloc élémentaire est proposé sous la forme d'une pluralité de segments de données.

Ainsi, grâce à l'invention, le procédé de traitement permet d'ordonner et par conséquent, d'envoyer de façon prioritaire les segments de données d'un ou de codages principaux vers l'entité assurant l'hébergement en prenant en compte la capacité d'acheminement disponible (par exemple la bande passante). Les codages principaux sont par exemple définis par le producteur du contenu temps réel administrant l'entité productrice. Cet envoi prioritaire permet ensuite d'assurer une distribution du contenu temps réel en mode direct à partir du ou des codages principaux. Le producteur n'a aucune action à mettre en oeuvre pour l'envoi des segments de données vers l'entité d'hébergement. Il doit uniquement définir quel(s) codages sont à traiter comme principaux. Les segments de données des autres codages, dits codages secondaires, sont transmis en fonction de la capacité résiduelle disponible. Les codages secondaires sont transmis progressivement vers l'entité d'hébergement et sont alors disponibles pour une distribution en mode différé. Il est alors possible de proposer aux entités clientes une qualité moyenne pour une distribution en mode direct et une meilleure qualité pour une distribution en mode différé. L'invention permet ainsi de lever la contrainte liée à la capacité d'acheminement vers l'entité d'hébergement et de mettre en oeuvre le codage adaptatif au niveau de l'entité productrice tout en garantissant une distribution en direct pour un ou plusieurs codages principaux.

L'invention tire son origine d'une restriction associée à une capacité d'acheminement restreinte de l'entité productrice à destination de l'entité d'hébergement, notamment du lien par l'intermédiaire duquel l'entité productrice accède à un réseau de communication. Il est ici souligné que la solution présente toujours un intérêt même en cas d'augmentation de cette capacité, liée à l'évolution des réseaux de communication, par exemple la mise en oeuvre de la fibre optique jusqu'à l'habitation (FTTH pour « Fiber To The Home ») ou des réseaux mobiles de quatrième génération. On constate en effet que lorsque les capacités des réseaux de communication augmentent, les besoins des applications augmentent également, par exemple en proposant de meilleures qualités ou bien encore des restitutions en trois dimensions.

Il est bien entendu que le ou les codages définis comme principaux sont tels que la capacité nécessaire à l'envoi des segments de données associés à ce ou ces codages est inférieure à la capacité d'acheminement. Le ou les codages principaux peuvent être choisis comme recouvrant le plus de caractéristiques communes des différentes entités clientes.

Il est ainsi possible de proposer par exemple pour un contenu temps réel vidéo trois codages caractérisés par des débits respectifs de 256 Kbps, 1 Mbps et 2 Mbps. L'entité productrice prépare ainsi trois suites de segments de données, correspondant respectivement à un des trois codages. La capacité en termes de bande passante nécessaire à la transmission de ces suites peut être approximée par la somme des codages, c'est-à-dire de l'ordre de 3,256 Mbps. Pour un réseau d'accès ADSL (pour « Asymmetric Digital Subscriber Line »), la capacité disponible est de l'ordre de 1 Mbps, ce qui ne permet pas l'envoi simultané des suites en vue d'une distribution en temps réel. Grâce au procédé de l'invention, le débit de 256 Kps peut être proposé pour une distribution en mode direct et les deux autres débits à 1Mbps et 2 Mbps pour une distribution de meilleure qualité en mode différé.

La capacité d'acheminement disponible peut être obtenue par une mesure initiée à partir de l'entité productrice.

Les différents modes ou caractéristiques de réalisation mentionnés ci-après peuvent être ajoutés indépendamment ou en combinaison les uns avec les autres, aux étapes du procédé de traitement tel défini précédemment.

Selon une caractéristique particulière, l'étape d'ordonnancement est mise en oeuvre en fonction d'une pluralité de poids respectivement associés à un codage de la pluralité de codages.

L'affectation de poids aux différents codages permet de définir des priorités relatives au sein des codages principaux et également au sein des codages secondaires. A un poids correspond un niveau de priorité. On peut ainsi garantir qu'un des codages principaux est transmis en priorité par rapport aux autres. On rappelle ici que le ou les codages principaux restent prioritaires par rapport à tous les codages secondaires.

Selon encore une autre caractéristique particulière, l'étape d'obtention d'une information représentative de la capacité d'acheminement est de nouveau mise en oeuvre au cours du traitement des blocs élémentaires du contenu.

On constate généralement que la capacité d'acheminement varie dans le temps sur le réseau de communication. La mise à jour de la capacité disponible permet de suivre ces fluctuations et d'utiliser sur chaque période la capacité disponible.

La mise à jour peut être réalisée de manière périodique.

Dans un mode de réalisation particulier, l'étape d'ordonnancement est mise en oeuvre par un algorithme appartenant au groupe comprenant un ordonnancement équitable, un ordonnancement équitable pondéré, une répartition pondérée par permutation circulaire.

Selon un deuxième aspect, l'invention concerne également une entité productrice proposant un contenu temps réel à des entités clientes sous la forme d'une pluralité de suites de segments de données correspondant respectivement à un codage d'une pluralité de codages, agencée pour ordonner les segments de données à émettre à destination d'une entité d'hébergement par l'intermédiaire de laquelle le contenu est proposé aux entités clientes :
- des moyens d'obtention d'une information représentative d'une capacité d'acheminement de segments de données de l'entité productrice à destination de l'entité d'hébergement ;
- des moyens d'obtention d'une information relative à au moins un codage de la pluralité de codages, dit codage principal ;
- des moyens de codage dudit bloc élémentaire en une pluralité de segments de données correspondant respectivement à un codage de la pluralité de codages ;
- des moyens d'ordonnancement des segments de données en fonction de l'information représentative de la capacité obtenue, les segments de données associés au codage principal étant prioritaires par rapport aux segments de données associés à des codages secondaires..

Les avantages énoncés pour le procédé de traitement selon le premier aspect sont transposables directement à l'entité productrice.

Selon un troisième aspect, l'invention concerne en outre un système de distribution de contenus proposant des contenus temps réel à des entités clientes sous la forme d'une pluralité de suites de segments de données correspondant respectivement à un codage d'une pluralité de codages, comprenant une entité productrice selon le deuxième aspect et au moins une entité d'hébergement, recevant les segments de données ordonnés..

Les avantages énoncés pour le procédé de traitement selon le premier aspect sont transposables directement au système de distribution de contenus.

Selon un quatrième aspect, l'invention concerne un programme pour une entité productrice, comprenant des instructions de code de programme destinées à commander l'exécution des étapes du procédé précédemment décrit, lorsque ledit programme est exécuté par ladite entité et un support d'enregistrement lisible par une entité productrice sur lequel est enregistré un programme pour une entité productrice.

L'invention sera mieux comprise à l'aide de la description suivante de modes de réalisation particuliers du procédé de l'invention, en référence aux dessins annexés sur lesquels :
- la figure 1 représente une entité productrice dans son environnement ;
- la figure 2 représente des étapes du procédé dans un mode de particulier de réalisation de l'invention ;
- la figure 3 représente une entité productrice selon un mode particulier de réalisation de l'invention.

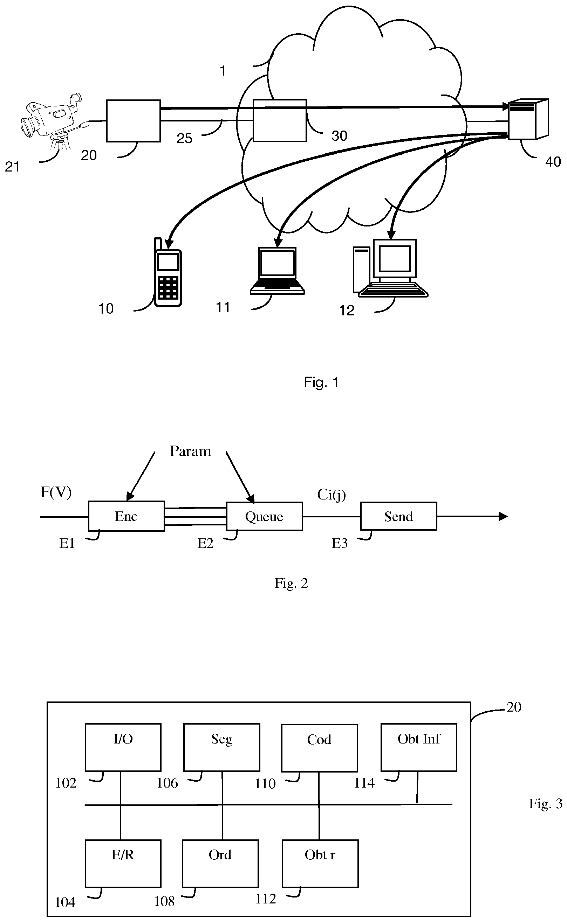

La figure 1 représente une entité productrice 20 proposant un contenu temps réel à des entités clientes 10, 11, 12 par l'intermédiaire d'une entité d'hébergement 40. Chaque entité cliente 10, 11, 12 accède par l'intermédiaire d'un réseau de communication 1 aux contenus proposés par des entités de distribution. Dans l'exemple illustratif de la figure 1, l'entité d'hébergement 40 joue également le rôle d'une entité de distribution. Aucune limitation n'est attachée à ce mode de réalisation. L'entité productrice 20 est reliée à des moyens de captation 21 qui produisent un contenu temps réel. Les moyens de captation 21 correspondent par exemple à une caméra vidéo et le contenu temps réel est un contenu vidéo. Le contenu peut également correspondre à un contenu audio. Aucune limitation n'est attachée au type de contenus. On se place par la suite dans le cas particulier d'une distribution d'un contenu temps réel.

L'entité productrice 20 segmente sous la forme de segments de données le contenu temps réel fourni par les moyens de captation 21. Plus précisément, un contenu est segmenté en une suite de blocs élémentaires successifs. Un bloc élémentaire correspond au contenu pendant une durée, qui peut être variable. A titre d'exemple non limitatif, ces blocs élémentaires peuvent être d'une durée fixe, de l'ordre de quelques secondes. Un bloc élémentaire est ensuite encodé par l'entité productrice 20 en une pluralité de segments de données respectivement associés à un codage d'une pluralité de codages différents. Plus précisément, pour chaque codage d'un ensemble de codage, le bloc élémentaire est encodé selon ce codage, auquel correspond un niveau de qualité de restitution donné. Aucune limitation n'est attachée au type de codage mis en oeuvre pour obtenir ces segments de données. Le codage adaptatif prévoit ainsi une pluralité de codages. Il peut par exemple s'agir de codages adaptatifs propriétaires tels que ceux proposés par les sociétés Adobe, Microsoft et Apple, ou bien encore d'un codage adaptatif DASH (pour « Dynamic Adaptative Streaming over HTTP », en cours de normalisation par le groupe MPEG). Pour un même contenu vidéo, il est alors possible par la mise en oeuvre d'un codage adaptatif de le proposer en trois formats de codage caractérisés par des débits respectifs de 256 Kbps, 1 Mbps et 2 Mbps.

Les moyens de captation 21 sont représentés comme distincts de l'entité productrice 20. Aucune limitation n'est attachée à cette forme de réalisation. Dans un mode de réalisation particulier, l'entité productrice 20 comprend les moyens de captation 21. L'entité productrice 20 peut notamment être tout type de terminal muni de moyens de captation 21, tels qu'un terminal mobile dit « intelligent » (ou smartphone), un ordinateur portable, un ordinateur, une tablette, etc.

L'entité productrice 20 et les moyens de captation 21 peuvent être co-localisés ou bien être distants, mais reliés dans ce cas par un lien haute capacité.

L'entité productrice 20 communique avec l'entité d'hébergement 40, par l'intermédiaire du réseau de communication 1. Plus précisément, l'entité productrice 20 est reliée par un lien 25 à un routeur d'accès 30 au réseau de communication 1. Le lien 25 est par exemple un lien ADSL de capacité disponible de 1 Mbps. Les segments de données à destination de l'entité d'hébergement sont ainsi acheminés par l'entité productrice 20 par l'intermédiaire du lien 25.

L'entité d'hébergement 40 communique également avec les entités clientes 10, 11, 12 par l'intermédiaire du réseau de communication 1 directement ou bien par l'intermédiaire d'autres réseaux de communication, non représentés sur la figure 1. Dans ce mode de réalisation, l'entité d'hébergement 40 héberge le contenu temps réel proposé par l'entité productrice 20 et distribue directement le contenu aux entités clientes 10, 11, 12. Dans un autre mode de réalisation, le contenu est transmis par l'entité productrice 20 à une entité assurant l'hébergement. Cette dernière positionne ensuite le contenu au niveau de différentes entités de distribution, non représentées sur la figure 1.

L'entité cliente peut être tout type de terminal, tel qu'un terminal mobile 10, un ordinateur portable 11, un ordinateur 12, une tablette, ...

Pour distribuer le contenu, une requête d'accès à un contenu C émise par l'entité cliente 10 est transmise à une entité de distribution. Cette requête est par exemple un message HTTP GET Request conformément au protocole HTTP, pour « HyperText Transfert Protocol ». Si le contenu est disponible, ce message est acquitté par un message HTTP Reply (par exemple, 200 OK). Il est ici souligné que le protocole HTTP est donné à titre d'exemple non limitatif. Il est ainsi possible de mettre en oeuvre la distribution pour tout type de protocole applicatif s'appuyant sur un protocole de transport fiable tel que TCP.

Nous allons maintenant décrire le procédé de traitement, tel qu'il est mis en oeuvre par l'entité productrice 20 dans un mode particulier de réalisation, en relation avec la figure 2.

Dans une première étape, non représentée sur la figure 2, l'entité productrice 20 obtient une information représentative d'une capacité d'acheminement de segments de données de l'entité productrice 20 à destination de l'entité d'hébergement 40. Dans un mode de réalisation particulier, cette information est représentative de la capacité du lien 25. Cette information peut être obtenue par différents moyens. Il peut s'agir d'une donnée de configuration à l'initialisation du procédé de traitement du contenu.

Dans un mode de réalisation particulier, l'entité productrice 20 met en oeuvre une étape de mesure de la capacité d'acheminement. Cette mesure peut être réalisée par un envoi d'une commande ICMP Echo Request (ou « Ping ») du protocole ICMP, pour « Internet Control Message Protocol »), de l'entité productrice 20 à l'entité d'hébergement 40. Cette dernière répond alors à l'entité productrice 20 par un message de réponse ICMP Echo Reply. La différence entre les instants d'émission de la commande Echo Request et de réception de la réponse Echo Reply permet de déterminer un temps d'aller-et-retour entre l'entité productrice 20 et l'entité d'hébergement 40. Dans un autre mode de réalisation, la commande Echo Request est envoyée au routeur d'accès 30, et permet ainsi une mesure de la capacité du lien 25.

Dans une deuxième étape, non représentée sur la figure 2, l'entité productrice 20 obtient une information relative à au moins un codage principal. A titre d'exemple illustratif, le codage à 256 kps est défini comme codage principal. Les autres codages 1 Mbps et 2 Mbps sont alors des codages secondaires. Cette information correspond par exemple à un identifiant du codage.

Dans une troisième étape E1, l'entité productrice 20 code un contenu temps réel vidéo reçu sous la forme d'un flux de données, noté F(V) sur la figure 2. On rappelle ici qu'il est transmis par les moyens de captation 21. L'entité productrice 20 segmente alors le flux vidéo sous la forme d'un bloc élémentaire et code un bloc élémentaire sous la forme de segments de données correspondant respectivement à un codage des différents codages. A l'issue de cette étape E1, les segments de données sont mis en files d'attente, une par niveau de codage.

Dans une quatrième étape E2, l'entité productrice 20 ordonnance les segments de données mémorisés dans les files d'attente associées au niveau de codage dans une file d'attente de sortie associée au lien 25, à destination de l'entité d'hébergement 40. Plus précisément, les segments de données sont ordonnancés en fonction de la capacité obtenue, les segments de données associés au(x) codage(s) principaux étant prioritaires par rapport aux segments de données associés à des codages secondaires. Les segments de données des codages secondaires sont placés dans la file d'attente de sortie en fonction de la capacité résiduelle. La capacité résiduelle correspond à la capacité du lien diminuée de celle nécessaire à l'émission des segments de données du ou des codages principaux.

Ainsi, dans l'exemple illustratif choisi précédemment, les segments de données du codage principal à 256 kps sont placés directement dans la file d'attente de sortie et les segments de données des codages secondaires à 1 Mbps et 2 Mbps sont quant à eux placés dans la file d'attente de sortie en fonction de la capacité résiduelle.

Une fois dans cette file d'attente de sortie, les segments de données sont émis dans une étape E3 en fonction de leur ordre.

Ainsi, les segments de données du ou des codages principaux sont émis en priorité, ceci permettant de garantir une distribution du contenu en mode direct pour le ou les codages principaux. Les segments de données des codages secondaires sont émis en fonction de la capacité résiduelle, ceci permettant de proposer le contenu en mode différé pour ces codages secondaires. De manière à assurer une distribution du contenu en mode direct avec une qualité minimum, les segments de données correspondant au codage 256 kbps sont envoyés en priorité. Progressivement, les segments de données des codages 1 Mbps et 2 Mbps sont envoyés en fonction de la capacité résiduelle vers l'entité d'hébergement 40, pour une distribution éventuellement en mode différé.

Dans un mode de réalisation particulier, l'étape d'ordonnancement E2 est mise en oeuvre par un ordonnancement équitable ou « fair queueing ».

Dans d'autres modes de réalisation, l'étape d'ordonnancement E2 est par exemple mise en oeuvre à l'aide d'algorithmes connus, tels qu'une répartition pondérée par permutation circulaire ou « weighted round robin », un ordonnancement équitable pondéré ou « weighted fair queuing ». Ces algorithmes permettent d'associer une pondération aux différents codages et d'ordonnancer les segments de données dans la file d'attente de sortie en fonction des poids respectifs. A un codage principal est associé un poids élevé. Ceci permet d'introduire une différenciation dans le traitement des segments de données des différents codages principaux. Les codages de poids élevé sont traités de façon prioritaire par rapport à ceux de poids peu élevés.

Dans un mode de réalisation particulier, l'étape d'obtention de l'information représentative de la capacité d'acheminement est de nouveau mise en oeuvre. Ceci permet de prendre en compte des fluctuations de la capacité d'acheminement. Il est possible de la mettre en oeuvre de façon régulière.

Le procédé de traitement tel que décrit précédemment peut être paramétré en fonction de choix du producteur administrant l'entité productrice. Ce paramétrage est possible en modifiant notamment les pondérations associées aux différents codages et donc aux différentes queues.

Ainsi, pour un premier paramétrage, il est possible d'assurer en priorité une distribution en direct au niveau de codage le plus bas, de transmettre les codages intermédiaires en fonction de la capacité résiduelle pour une distribution différée mais toutefois disponible rapidement, puis les codages supérieurs accessible de manière totalement différée. Pour ce premier paramétrage, le poids du codage le plus bas est infini (ou maximum), celui du codage intermédiaire est de cinq et celui du codage supérieur est de un. Autrement dit la file d'attente des segments de données associée au codage le plus bas (256 kps) est servie dès qu'un segment de données y est mémorisé à l'issue de l'étape E1. Celle associée au codage intermédiaire (1 Mbps) est servie cinq fois plus que celle associée au codage supérieur (2 Mbps).

Pour un deuxième paramétrage, il est possible d'assurer en priorité une distribution en mode direct au niveau de codage le plus bas, puis envoyer indifféremment les segments de données associés aux codages intermédiaire et supérieur.

Pour un troisième paramétrage, il est possible d'assurer une distribution en mode direct pour le codage intermédiaire, avec le cas échéant des interruptions temporaires dégradant la qualité de restitution, et d'assurer la distribution du contenu sur l'ensemble des codages disponibles en mode différé.

Nous allons maintenant décrire une entité productrice 20 dans un mode particulier de réalisation de l'invention en référence à la figure 3. Une telle entité productrice 20 est notamment agencée pour ordonner des segments de données correspondant respectivement à un codage d'une pluralité de codages à émettre à destination de l'entité d'hébergement, plus précisément par l'intermédiaire d'un lien 25 reliant l'entité productrice 20 au réseau de communication 1.

L'entité productrice 20 comprend notamment :
- un module 102 d'entrée/sortie, agencé pour recevoir un contenu à coder en provenance de moyens de captation 21 ;
- un module 104 d'émission/réception, agencé notamment pour émettre par l'intermédiaire du lien 25 des segments de données ordonnés et mémorisés dans une file d'attente de sortie à destination de l'entité d'hébergement 40 ;
- un module 106 de segmentation, agencé pour segmenter un contenu à coder en blocs élémentaires ;
- un module 114 d'obtention d'une information relative à un ou plusieurs codages, dits codages principaux ;
- un module 112 d'obtention d'une information représentative d'une capacité d'acheminement de l'entité productrice à destination de l'entité d'hébergement 40 ;
- un module de codage 110 d'un bloc élémentaire du contenu en une pluralité de segments de données correspondant respectivement à un codage de la pluralité de codages ;
- un module 108 d'ordonnancement, agencé pour ordonner en fonction de l'information représentative de la capacité d'acheminement des segments de données mémorisés dans des files d'attente respectivement associées à un codage dans la file d'attente de sortie.

Dans un mode de réalisation particulier, l'information représentative de la capacité d'acheminement est représentative de la capacité du lien 25.

Le module 108 d'ordonnancement est notamment agencé pour ordonner les segments de données du ou des codages principaux en priorité par rapport à ceux du ou des codages secondaires.

Dans un mode de réalisation, le module 112 d'obtention d'une information représentative d'une capacité d'acheminement est notamment agencé pour mettre en oeuvre une mesure de cette capacité.

Dans un mode de réalisation particulier, le module 108 d'ordonnancement met en oeuvre des algorithmes d'ordonnancement, tels qu'une répartition pondérée par permutation circulaire « weighted round robin », un ordonnancement équitable « fair queuing », un ordonnancement équitable pondéré « weighted fair queuing ».

Dans un mode de réalisation, l'entité productrice 20 comprend des moyens de captation 21 de contenus temps réel.

Dans un mode de réalisation, le module 104 d'émission/réception est agencé pour transmettre par une liaison haut débit les segments de données ordonnés et un module d'émission/réception externe à l'entité productrice est en charge des émissions des segments de données ordonnés par l'intermédiaire du lien 25.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 106, 108, 110, 112, 114 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par l'entité productrice 20. L'invention concerne donc aussi :
- un programme d'ordinateur pour une entité productrice, comprenant des instructions de code de programme destinées à commander l'exécution des étapes du procédé précédemment décrit, lorsque ledit programme est exécuté par cette entité ;
- un support d'enregistrement lisible par une entité productrice sur lequel est enregistré le programme pour entité productrice.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de distribution de contenus proposant des contenus temps réel à des entités clientes sous la forme d'une pluralité de suites de segments de données correspondant respectivement à un codage d'une pluralité de codages, comprenant au moins une entité productrice telle que décrite précédemment et au moins une entité d'hébergement, recevant les segments de données ordonnés.

## Revendications

1. Procédé de traitement d'un contenu à proposer temps réel à des entités clientes (10, 11, 12) par l'intermédiaire d'une entité d'hébergement (40), ledit contenu étant segmenté en une suite de blocs élémentaires, ledit procédé comprenant les étapes suivantes :
- une étape d'obtention d'une information représentative d'une capacité d'acheminement de segments de données sur le lien entre l'entité productrice et l'entité d'hébergement ;
- une étape de sélection, par l'entité productrice, d'un codage principal à partir de la pluralité de codages, ledit codage principal étant tel que la capacité nécessaire à l'envoi des segments de données qui lui sont associés est inférieure à ladite capacité d'acheminement du lien ;
et pour un bloc élémentaire du contenu :
- une étape de codage (E1), par l'entité productrice, dudit bloc élémentaire en une pluralité de segments de données correspondant respectivement à un codage d'une pluralité de codages ;
- une étape d'ordonnancement (E2), par l'entité productrice, des segments de données en fonction de la capacité d'acheminement résiduelle du lien, ladite capacité d'acheminement résiduelle correspondant à ladite capacité d'acheminement du lien diminuée de la capacité nécessaire à l'envoi des segments de données dudit codage principal, les segments de données associés au codage principal étant prioritaires par rapport aux segments de données associés à d'autres codages, dits codages secondaires, de ladite pluralité de codages ;
- une étape d'envoi, à l'entité d'hébergement, desdits segments de données, lesdits segments de données associés au codage principal étant envoyés prioritairement, et les segments de données desdits codages secondaires étant envoyés progressivement en fonction de ladite capacité d'acheminement résiduelle du lien.

2. Procédé selon la revendication 1, dans lequel l'étape d'ordonnancement est mise en oeuvre en fonction d'une pluralité de poids respectivement associés à un codage de la pluralité de codages.

3. Procédé selon la revendication 1, dans lequel l'étape d'obtention d'une information représentative de la capacité d'acheminement est de nouveau mise en oeuvre au cours du traitement des blocs élémentaires du contenu.

4. Procédé selon la revendication 1, dans lequel l'étape d'ordonnancement est mise en oeuvre par un algorithme appartenant au groupe comprenant un ordonnancement équitable, un ordonnancement équitable pondéré, une répartition pondérée par permutation circulaire.

5. Entité productrice (20) proposant un contenu temps réel à des entités clientes (10, 11, 12) agencée pour ordonner les segments de données à émettre à destination d'une entité d'hébergement par l'intermédiaire de laquelle le contenu est proposé aux entités clientes, ladite entité productrice comprenant :
- des moyens d'obtention (112) d'une information représentative d'une capacité d'acheminement de segments de données sur le lien entre l'entité productrice et l'entité d'hébergement ;
- des moyens de sélection d'un codage principal à partir de la pluralité de codages, ledit codage principal étant tel que la capacité nécessaire à l'envoi des segments de données qui lui sont associés est inférieure à ladite capacité d'acheminement du lien ;
- des moyens de codage (110) dudit bloc élémentaire en une pluralité de segments de données correspondant respectivement à un codage d'une pluralité de codages ;
- des moyens d'ordonnancement (108) des segments de données en fonction de la capacité d'acheminement résiduelle du lien, ladite capacité d'acheminement résiduelle correspondant à ladite capacité d'acheminement du lien diminuée de la capacité nécessaire à l'envoi des segments de données dudit codage principal, les segments de données associés au codage principal étant prioritaires par rapport aux segments de données associés à d'autres codages, dits codages secondaires, de ladite pluralité de codages ;
- des moyens d'émission (104) desdits segments de données, lesdits segments de données associés au codage principal étant envoyés prioritairement, et les segments de données desdits codages secondaires étant envoyés progressivement en fonction de ladite capacité d'acheminement résiduelle du lien.

6. Système de distribution de contenus proposant des contenus temps réel à des entités clientes (10, 11, 12) sous la forme d'une pluralité de suites de segments de données correspondant respectivement à un codage d'une pluralité de codages, comprenant une entité productrice (20) selon la revendication 5, et au moins une entité d'hébergement (40) recevant les segments de données ordonnés.

7. Programme pour une entité productrice, comprenant des instructions de code de programme destinées à commander l'exécution des étapes du procédé selon l'une des revendications 1 à 4, lorsque ledit programme est exécuté par ladite entité.

8. Support d'enregistrement lisible par une entité productrice sur lequel est enregistré le programme selon la revendication 7.

## Patentansprüche

1. Verfahren zum Verarbeiten eines Inhalts, der Client-Entitäten (10, 11, 12) über eine Host-Entität (40) in Echtzeit vorgeschlagen werden soll, wobei der Inhalt in eine Folge elementarer Blöcke segmentiert ist, wobei das Verfahren die folgenden Schritte umfasst:
- einen Schritt des Erhaltens von Informationen, die eine Transportkapazität für Datensegmente auf der Verbindung zwischen der erzeugenden Entität und der Host-Entität repräsentieren;
- einen Schritt des Auswählens durch die erzeugende Entität einer Hauptcodierung ausgehend von mehreren Codierungen, wobei die Hauptcodierung derart ist, dass die Kapazität, die erforderlich ist, um die Datensegmente, die ihr zugeordnet sind, zu schicken, kleiner als die Transportkapazität der Verbindung ist;
und für einen elementaren Block des Inhalts:
- einen Schritt des Codierens (E1) durch die erzeugende Entität des elementaren Blocks in mehrere Datensegmente, die jeweils einer von mehreren Codierungen entsprechen;
- einen Schritt des Ordnens (E2) durch die erzeugende Entität von Datensegmenten als Funktion der verbleibenden Transportkapazität der Verbindung, wobei die verbleibende Transportkapazität der Transportkapazität der Verbindung, verringert um die Kapazität, die erforderlich ist, um Datensegmente der Hauptcodierung zu schicken, entspricht, wobei die Datensegmente, die der Hauptcodierung zugeordnet sind, in Bezug auf die Datensegmente, die anderen Codierungen, die sekundäre Codierungen genannt werden, der mehreren Codierungen zugeordnet sind, Priorität haben;
- einen Schritt des Schickens zu der Host-Entität der Datensegmente, wobei die Datensegmente, die der Hauptcodierung zugeordnet sind, mit Priorität geschickt werden und die Datensegmente der sekundären Codierungen allmählich als Funktion der verbleibenden Transportkapazität der Verbindung geschickt werden.

2. Verfahren nach Anspruch 1, wobei der Ordnungsschritt als Funktion mehrerer Gewichte ausgeführt wird, die jeweils einer Gewichtung der mehreren Codierungen zugeordnet sind.

3. Verfahren nach Anspruch 1, wobei der Schritt des Erhaltens von Informationen, die die Transportkapazität repräsentieren, im Verlauf der Verarbeitung der elementaren Blöcke des Inhalts erneut ausgeführt wird.

4. Verfahren nach Anspruch 1, wobei der Schritt des Ordnens durch einen Algorithmus ausgeführt wird, der zu einer Gruppe gehört, die eine gerechte Ordnung, eine gewichtete gerechte Ordnung und eine durch zirkuläre Permutation gewichtete Verteilung umfasst.

5. Erzeugende Entität (20), die einen Inhalt Client-Entitäten (10, 11, 12) in Echtzeit vorschlägt und die dafür ausgelegt ist, die Datensegmente zu ordnen, die zu einer Host-Entität gesendet werden sollen, über die der Inhalt den Client-Entitäten vorgeschlagen wird, wobei die erzeugende Entität Folgendes umfasst:
- Mittel (112) zum Erhalten von Informationen, die eine Transportkapazität für Datensegmente auf der Verbindung zwischen der erzeugenden Entität und der Host-Entität repräsentieren;
- Mittel zum Auswählen einer Hauptcodierung ausgehend von mehreren Codierungen, wobei die Hauptcodierung derart ist, dass die Kapazität, die erforderlich ist, um die Datensegmente, die ihr zugeordnet sind, zu schicken, kleiner als die Transportkapazität der Verbindung ist;
- Mittel (110) zum Codieren des elementaren Blocks in mehrere Datensegmente, die jeweils einer von mehreren Codierungen entsprechen;
- Mittel (108) zum Ordnen der Datensegmente als Funktion der verbleibenden Transportkapazität der Verbindung, wobei die verbleibende Transportkapazität der Transportkapazität der Verbindung, verringert um die Kapazität, die erforderlich ist, um die Datensegmente der Hauptcodierung zu schicken, entspricht, wobei die Datensegmente, die der Hauptcodierung zugeordnet sind, in Bezug auf die Datensegmente, die anderen Codierungen, die sekundäre Codierungen genannt werden, der mehreren Codierungen zugeordnet sind, Priorität haben;
- Mittel (104) zum Senden der Datensegmente, wobei die Datensegmente, die der Hauptcodierung zugeordnet sind, mit Priorität geschickt werden und die Datensegmente der sekundären Codierungen allmählich als Funktion der verbleibenden Transportkapazität der Verbindung geschickt werden.

6. Inhaltverteilungssystem, das Inhalte Client-Entitäten (10, 11, 12) in Form mehrerer Folgen von Datensegmenten, die jeweils einer von mehreren Codierungen entsprechen, in Echtzeit vorschlägt, das eine erzeugende Entität (20) nach Anspruch 5 und wenigstens eine Host-Entität (40), die die geordneten Datensegmente empfängt, umfasst.

7. Programm für eine erzeugende Entität, das Programmcodebefehle enthält, die dazu bestimmt sind, die Ausführung der Schritte des Verfahrens nach einem der Ansprüche 1 bis 4 zu steuern, wenn das Programm von der Entität ausgeführt wird.

8. Aufzeichnungsträger, der von einer erzeugenden Entität gelesen werden kann und auf dem das Programm nach Anspruch 7 aufgezeichnet ist.

## Claims

1. Method of processing a real-time content to be offered to client entities (10, 11, 12) by way of a hosting entity (40), the said content being segmented into a string of elementary blocks, the said method comprising the following steps:
- a step of obtaining an item of information representative of a capacity for forwarding data segments over the link between the producer entity and the hosting entity;
- a step of selecting, by the producer entity, a main coding from the plurality of codings, the said main coding being such that the capacity required to dispatch data segments associated therewith is less than the said forwarding capacity of the link;
and for an elementary block of the content:
- a step of coding (E1), by the producer entity, the said elementary block as a plurality of data segments corresponding respectively to a coding of a plurality of codings;
- a step of scheduling (E2), by the producer entity, the data segments as a function of the residual forwarding capacity of the link, the said residual forwarding capacity corresponding to the said forwarding capacity of the link minus the capacity required to dispatch data segments of the said main coding, the data segments associated with the main coding having priority with respect to the data segments associated with other codings, termed secondary codings, of the said plurality of codings;
- a step of dispatching, to the hosting entity, the said data segments, the said data segments associated with the main coding being dispatched by priority, and the data segments of the said secondary codings being dispatched progressively as a function of the said residual forwarding capacity of the link.

2. Method according to Claim 1, in which the scheduling step is implemented as a function of a plurality of weights respectively associated with a coding of the plurality of codings.

3. Method according to Claim 1, in which the step of obtaining an item of information representative of the forwarding capacity is implemented again in the course of the processing of the elementary blocks of the content.

4. Method according to Claim 1, in which the scheduling step is implemented by an algorithm belonging to the group comprising an equitable scheduling, a weighted equitable scheduling, a distribution weighted by circular permutation.

5. Producer entity (20) offering a real-time content to client entities (10, 11, 12) and designed to order the data segments to be sent to a hosting entity by way of which the content is offered to the client entities, the said producer entity comprising:
- means (112) for obtaining an item of information representative of a capacity for forwarding data segments over the link between the producer entity and the hosting entity;
- means for selecting a main coding from the plurality of codings, the said main coding being such that the capacity required to dispatch data segments associated therewith is less than the said forwarding capacity of the link;
- means (110) for coding the said elementary block as a plurality of data segments corresponding respectively to a coding of a plurality of codings;
- means (108) for scheduling the data segments as a function of the residual forwarding capacity of the link, the said residual forwarding capacity corresponding to the said forwarding capacity of the link minus the capacity required to dispatch data segments of the said main coding, the data segments associated with the main coding having priority with respect to the data segments associated with other codings, termed secondary codings, of the said plurality of codings;
- means (104) for sending the said data segments, the said data segments associated with the main coding being dispatched by priority, and the data segments of the said secondary codings being dispatched progressively as a function of the said residual forwarding capacity of the link.

6. System for distributing contents offering real-time contents to client entities (10, 11, 12) in the form of a plurality of strings of data segments corresponding respectively to a coding of a plurality of codings, comprising a producer entity (20) according to Claim 5, and at least one hosting entity (40), receiving the ordered data segments.

7. Program for a producer entity, comprising program code instructions intended to control the execution of the steps of the method according to one of Claims 1 to 4, when the said program is executed by the said entity.

8. Recording medium, readable by a producer entity, and on which the program according to Claim 7 is recorded.
